# EUROPEAN PATENT APPLICATION

(11) **EP 4 691 725 A1**
(43) Date of publication of application: **11.02.2026**
(21) Application number: 24861312.7
(22) Date of filing: 16.07.2024
(51) Int. Cl.: B29B 17/02, B07B 13/11

(54) **APPARATUS FOR REMOVING FOREIGN SUBSTANCES FROM WASTE PLASTIC**

(30) Priority: 17.10.2023 KR 20230138482; 04.07.2024 KR 20240087906
(71) Applicant: LG Chem, Ltd., Seoul 07336 (KR)
(72) Inventor: LEE, Sang Ho, Daejeon 34122 (KR); LEE, Jun Se, Gwangju 62464 (KR); OH, Hyun Taek, Daejeon 34122 (KR); KIM, Jae Young, Daejeon 34122 (KR); HAN, Jung Jin, Daejeon 34122 (KR); KIM, Do Dam, Daejeon 34122 (KR)
(74) Representative: Goddar, Heinz J.
(86) International application number: PCT/KR2024/010140
(87) International publication number: WO 2025/084551

(57) **Abstract**

The present disclosure relates to an apparatus for removing a foreign substance from waste plastic, and more particularly, to an apparatus for removing a foreign substance from waste plastic that removes a foreign substance attached to a surface of waste plastic by enhancing frictional performance of a surface of a waste plastic flake, and improves cooling performance by supplying moisture in the form of mist to frictional heat generated at that time.

## Description

### CROSS-REFERENCE TO RELATED APPLICATIONS

This application claims priority to and the benefit of Korean Patent Application No. 10-2023-0138482 filed on October 17, 2023 and Korean Patent Application No. 10-2024-0087906 filed on July 4, 2024, which are hereby incorporated by reference in their entirety.

### [Technical Field]

The present disclosure relates to an apparatus for removing a foreign substance from waste plastic, and more particularly, to an apparatus capable of removing foreign substances attached to a surface of waste plastic by rubbing the surface of the waste plastic and controlling frictional heat generated during the removal.

### [Background Art]

As environmental regulations due to global warming spread worldwide, much effort is being made to recycle and utilize plastics. The biggest problem in recycling plastics for resource circulation is foreign substances. When adhesives or plating are attached to plastics during manufacturing of products or when plastics are contaminated while being used by users, it is difficult to process the plastics for reuse even if they are recovered, and since the process of removing foreign substances is not environmentally friendly, the meaning of recycling the plastics often fades.

Specifically, even if plastics such as ABS resin or polypropylene (PP) used in electronic products are recycled, foreign substances such as adhesives, plating, or paint used during the manufacturing of the products remain on the surface thereof and thus the appearance quality is poor, which greatly limits the use of the plastics when recycled. In the past, a method that dissolves foreign substances using mainly organic solvents or acid-based substances to remove foreign substances from the surface of waste plastics has been studied and used, but a chemical treatment method is not preferable in terms of cost or environmental impact because it generates harmful secondary emissions. Accordingly, physical eco-friendly recycling technologies have been demanded to replace chemical recycling technologies to remove the foreign substances attached to waste plastics.

As the conventional physical method, a method has been applied to crush waste plastics and then rub the crushed waste plastics to remove foreign substances on the surface. However, in order to sufficiently remove the foreign substances on the surface of the waste plastics using the physical method, it is essential to perform friction processing repeatedly several times. However, the frictional heat is generated during the friction processing to heat up raw materials. Therefore, there is a problem in that the raw materials should be cooled in order to perform the friction processing repeatedly. Therefore, research on a physical recycling method that effectively removes the foreign substances on a surface of waste plastic flake while controlling the frictional heat is needed.

### [Disclosure]

### [Technical Problem]

The present disclosure provides an apparatus for removing a foreign substance from waste plastic capable of improving performance of removing foreign substances by controlling frictional heat generated when removing foreign substances attached to a surface of waste plastic by rubbing the surface of the waste plastic through the supply of moisture.

However, problems to be solved by the present disclosure are not limited to the above-mentioned aspects. That is, other aspects that are not described may be obviously understood by those skilled in the art from the following specification.

### [Technical Solution]

According to one embodiment of the present disclosure, there is provided an apparatus for removing a foreign substance from waste plastic, including a waste raw material injection unit that is provided on an upper portion of one side to inject a waste plastic flake, a foreign substance removal unit that removes foreign substances attached to the waste plastic flake by friction, and a raw material outlet that is provided on the other side portion to discharge the waste plastic flake from which the foreign substances are removed.

In addition, the apparatus for removing a foreign substance from waste plastic according to an embodiment of the present disclosure includes a friction screen that is disposed inside the foreign substance removal unit to accommodate the waste plastic flake supplied from the waste raw material injection unit.

The apparatus for removing a foreign substance from waste plastic according to an embodiment of the present disclosure includes a rotating shaft that has a friction blade provided on an outer circumferential surface thereof, is rotatably disposed inside the friction screen, and peels off the foreign substances attached to the waste plastic flake by rubbing the waste plastic flake in a rotational manner.

In addition, the apparatus for removing a foreign substance from waste plastic according to an embodiment of the present disclosure includes a moisture injection nozzle that is provided at one end of the rotating shaft to supply moisture to the foreign substance removal unit.

In addition, the rotating shaft includes a moisture injection path that is provided therein and supplied with moisture from the moisture injection nozzle and transports the moisture and a moisture supply port that is provided on one surface of the friction blade to discharge the moisture from the moisture injection path to an outside of the rotating shaft and supply the moisture to the foreign substance removal unit.

### [Advantageous Effects]

According to the apparatus for removing a foreign substance from waste plastic according to an embodiment of the present disclosure, it is possible to provide improved foreign substance removal capability by enhancing friction performance of a surface of a waste plastic flake and expand a friction limit by enhancing a cooling function of the surface of the waste plastic flake.

Specifically, according to the apparatus for removing a foreign substance from waste plastic according to an embodiment of the present disclosure, by evenly supplying mist-like moisture during the friction processing to remove the foreign substances on the surface of the waste plastic flake, it is possible to cool frictional heat and swell foreign substances on the surface of the waste plastic flake so that the foreign substances are easily removed.

In addition, by having a closed structure to minimize the inflow of external air into the apparatus to lower the air pressure in the friction processing area for removing foreign substances and use sensible heat of the supplied moisture and latent heat generated during the evaporation for cooling, it is possible to maximize the cooling effect of the waste plastic flake.

Effects which can be achieved by the present disclosure are not limited to the above-described effects. That is, other objects that are not described may be obviously understood by those skilled in the art to which the present disclosure pertains from the following description.

### [Brief Description of Drawings]

FIG. 1 is a cross-sectional view illustrating a structure of an apparatus for removing a foreign substance from waste plastic according to an embodiment of the present disclosure.
FIG. 2 is a cross-sectional view taken along the line A-A' of FIG. 1.
FIG. 3 is a cross-sectional view illustrating the structure of the apparatus for removing a foreign substance from waste plastic according to an embodiment of the present disclosure.
FIG. 4 is a cross-sectional view taken along the line B-B' of FIG. 3.

### [Best Mode]

Terms and words used in the present specification and claims are not to be construed as a general or dictionary meaning, and are to be construed as meaning and concepts meeting the technical spirit of the present disclosure based on a principle that the inventors may appropriately define the concepts of terms in order to describe their own inventions in the best mode.

In connection with the description of the drawings, similar reference symbols may be used for similar or related components.

The singular form of a noun corresponding to an item may include one or more of the items, unless the relevant context clearly indicates otherwise.

In the present disclosure, each phrase such as "A or B," "at least one of A and B," "at least one of A or B," "A, B, or C," "at least one of A, B and C," and "at least one of A, B, or C" may include any one of items listed together in the corresponding one of those phrases, or all possible combinations thereof.

The term "and/or" includes a combination of a plurality of related described components or any one of the plurality of related described components.

The terms "first," "second", "1st," "2nd," or the like may be used only to distinguish one component from the other components, and do not limit the corresponding components in other respects (e.g., importance or a sequence).

In addition, the terms such as 'front,' 'rear,' 'top,' 'bottom,' 'side,' 'left,' 'right,' 'inner,' 'outer,' 'upper,' 'lower,' 'inside,' 'outside,' etc., used herein are defined based on the drawings, the shape and position of each component are not limited by this term.

It will be understood that terms 'include' or 'have' used in the present disclosure, specify the presence of features, numerals, steps, operations, components, parts mentioned in the present specification, or a combination thereof, but do not preclude the presence or addition of one or more other features, numerals, steps, operations, components, parts, or a combination thereof.

When a component is "connected," "coupled," "supported," or "contacted" with another component, this includes not only cases where the components are directly connected, coupled, supported, or contacted, but also cases where the components are indirectly connected, coupled, supported or contacted through a third component.

When a component is positioned "on" another component, this includes not only cases where a component is in contact with another component, but also cases where another component exists between the two components.

The terms "about", "substantially", and the like used herein are used in the sense of the numerical value or a meaning close to the numerical value when the manufacturing and material tolerance inherent in the meaning mentioned are presented, and are used to prevent unscrupulous infringers from unfairly using the disclosure contents that mention exact or absolute values to help understand the present disclosure.

In addition, the "pressure" mentioned herein means a gauge pressure measured based on atmospheric pressure.

A "raw material" mentioned herein refers to plastic. In addition, "waste plastic" mentioned herein may include natural polymers, synthetic polymers, or mixtures thereof, and the synthetic polymers may include thermoplastic resins such as polyethylene (PE), polypropylene (PP), and polystyrene. In addition, the thermoplastic resin may be mixed with other types of resins such as PVC (polyvinyl chloride), PET (polyethylene terephthalate), thermosetting resins, and the like.

Before describing the present disclosure, it should be noted that a motor required for rotational power, a blower fan required for blowing wind, an intake fan for sucking wind, etc., are not the main points of the present disclosure, and thus are not described in detail and are not illustrated in the drawings.

As the conventional physical method for removing foreign substances from waste plastics, a method of crushing waste plastics and then rubbing the crushed waste plastics to remove foreign substances on a surface has been applied. However, in order to sufficiently remove the foreign substances on the surface of the waste plastics using the physical method, it is essential to perform friction processing repeatedly several times. In addition, in an open-structure apparatus, while maintaining intake with a blower, the external air is sucked in and the dust generated during friction processing is discharged. However, the frictional heat is generated during the friction processing to heat up raw materials. Therefore, there is a problem in that the raw materials should be cooled in order to perform the friction processing repeatedly.

Therefore, in the present disclosure, in order to effectively remove the foreign substances on the surface of the waste plastic flake while controlling frictional heat, the existing open-structure apparatus is designed to change to a closed structure as much as possible to minimize the inflow of external air, thereby lowering the air pressure in the foreign substance removal unit where the friction processing is performed. In addition, by designing the apparatus so that moisture can be intensively supplied to the foreign substance removal unit through the rotating shaft, moisture may be evenly sprayed on the waste plastic flake to achieve a cooling effect of frictional heat, and the supplied moisture may play a role in allowing the foreign substances on the surface of the waste plastic flake to be easily removed by friction.

Hereinafter, the apparatus for removing a foreign substance from waste plastic of the present disclosure will be described with reference to the attached drawings, but the attached drawings are exemplary and the scope of the apparatus for removing a foreign substance from waste plastic is not limited thereto.

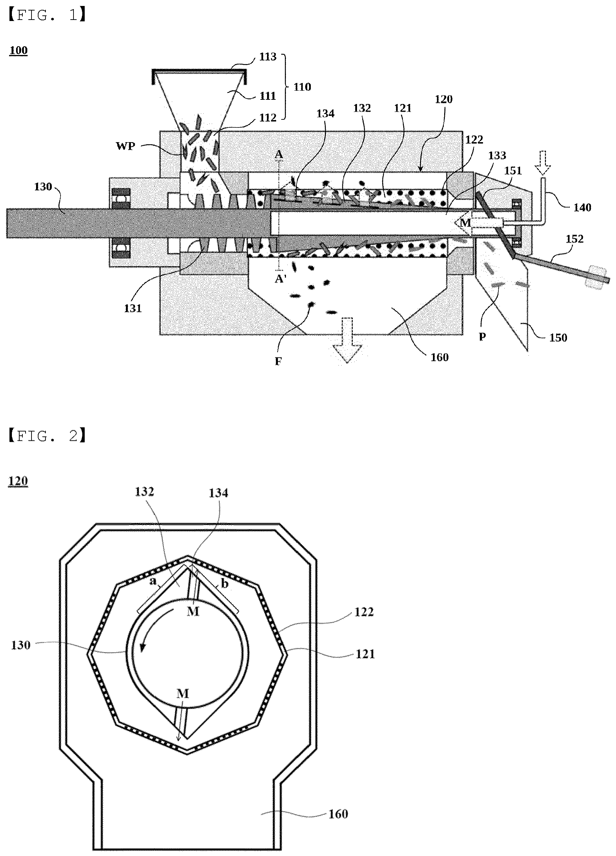

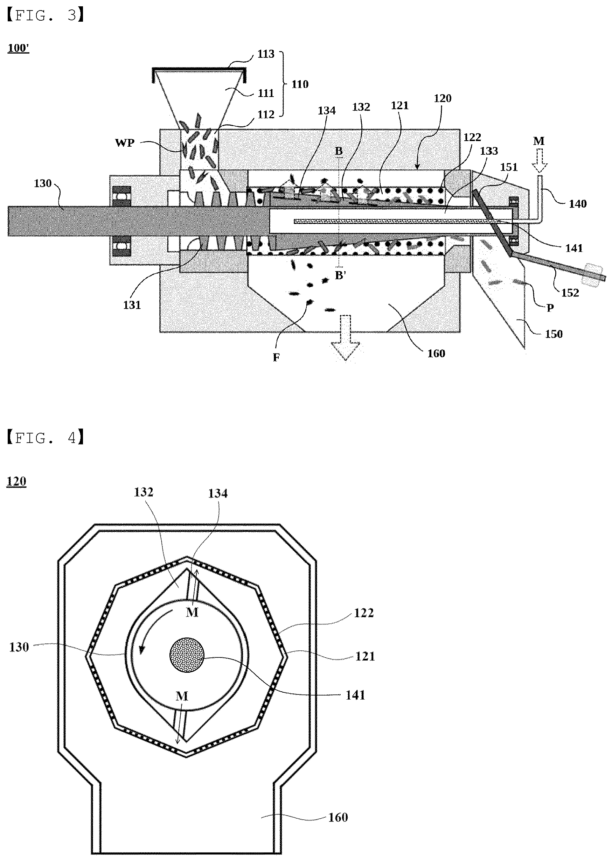

FIGS. 1 and 3 are cross-sectional views schematically illustrating a structure of an apparatus for removing a foreign substance from waste plastic according to one embodiment of the present disclosure, and FIGS. 2 and 4 are cross-sectional views taken along the line A-A' of FIG. 1 and the line B-B' of FIG. 3, respectively, and illustrate a structure of a foreign substance removal unit of the apparatus for removing a foreign substance from waste plastic.

As illustrated in FIG. 1, the apparatus 100 for removing a foreign substance from waste plastic according to the present disclosure includes a waste raw material injection unit 110 that is provided on an upper portion of one side to inject a waste plastic flake WP, a foreign substance removal unit 120 that removes foreign substances attached to the waste plastic flake by friction, and a raw material outlet 150 that is provided on the other side portion to discharge the waste plastic flake P from which the foreign substances are removed.

In addition, the apparatus 100 for removing a foreign substance from waste plastic according to the present disclosure may include a body configured in a box-shaped housing shape, a friction screen 121 accommodated inside the body, a rotating shaft 130 that is disposed to penetrate through a center of the body and the friction screen, and a moisture injection nozzle 140 that is provided at one end of the rotating shaft. In addition, an injection screw 131 may be provided in the waste raw material injection unit area of an outer circumferential surface of the rotating shaft 130, a friction blade 132 may be provided in the foreign substance removal unit area, a moisture injection path 133 may be provided in the inside of the rotating shaft 130 so that moisture M supplied from a moisture injection nozzle 140 may move, and a moisture supply port 134 may be provided to connect the inner area and the outer area of the rotating shaft.

In addition, as illustrated in FIG. 3, an apparatus 100' for removing a foreign substance from waste plastic according to one example may further include a porous guide 141 that is connected to one end of the moisture injection nozzle 140.

The waste raw material injection unit 110 may include an injection hopper 111 that is provided on an upper portion of one side of the body, an injection path 112 that is provided on the inside of the body and connected to the injection hopper, and a hopper cover 113 that is provided on an upper portion of the injection hopper.

The injection hopper 111 may be provided on the upper portion of one side of the body and may inject the waste plastic flake WP into the apparatus 100 for removing a foreign substance from waste plastic.

In addition, the injection path 112 may be connected to the injection hopper 111 and may transport the waste plastic flake WP supplied from the injection hopper 111 to the foreign substance removal unit 120. Here, the injection screw 131 for transporting the waste plastic flake WP to the foreign substance removal unit 120 may be provided on the outer circumferential surface of the rotating shaft 130 positioned on the injection path 112. The above-described injection screw 131 may transport the waste plastic flake WP injected from the injection hopper 111 toward the foreign substance removal unit 120 according to the rotation of the rotating shaft 130.

Meanwhile, the waste plastic flake WP may be preprocessed before being injected into the apparatus 100 for removing a foreign substance from waste plastic, and may be obtained by crushing and cutting the collected waste plastic into small pieces and crushing the waste plastic in the piece shape into smaller pieces. When a size of the waste plastic flake WP injected into the apparatus 100 for removing a foreign substance from waste plastic is too large, the waste plastic flake WP may be blocked in the injection hopper 111 or may not enter a pitch of the injection screw 131, and thus, may make it difficult to transport toward the foreign substance removal unit 120. On the other hand, when the size of the waste plastic flake WP is too small, the waste plastic flake WP escapes through a plurality of holes 122 of the friction screen 121 to be described later, so even the raw material to be recovered may be lost. For example, an average particle size of the waste plastic flake WP may be about 5 mm to 30 mm, and specifically about 10 mm to 25 mm, but is not limited thereto.

In addition, the hopper cover 113 may be provided on the upper portion of the injection hopper 111 to block the inflow of external air. By providing the hopper cover, the inflow of external air into the apparatus may be blocked, thereby configuring the inside of the apparatus as a closed structure, which may be advantageous in controlling the pressure inside the apparatus. In this case, a separate raw material injection port (not illustrated) for injecting the waste plastic flake into the injection hopper 111 may be provided on one side of the hopper cover 113.

The friction screen 121 may be disposed inside the foreign substance removal unit 120 to accommodate the waste plastic flake WP supplied from the waste raw material injection unit 110. More specifically, the friction screen 121 may have the plurality of holes 122 provided on a front surface thereof, and discharge foreign substances F peeled off from the waste plastic flake to the outside of the friction screen through the plurality of holes.

The friction screen 121 may be formed in any one structure selected from a polygonal tubular structure and a cylindrical structure. That is, the A-A' cross-section of the friction screen 121 illustrated in FIG. 1 may be a polygon or a circle, and for example, the polygon may be a hexagon to a decagon, and more specifically, an octagon. In particular, when the friction screen has a polygonal structure, it is possible to improve the foreign substance removal effect while maintaining the foreign substance peeling treatment amount of the surface of the waste plastic flake rubbed by the friction blade 132 rotating inside the friction screen 121 at an appropriate level. More specifically, the smaller the angle of the friction screen (121), the closer the distance from the friction blade 132, which may increase the pressure and frictional force applied to the waste plastic flake WP. However, when the pressure and frictional force applied to the waste plastic flake WP increase excessively, the resistance of the torque applied to the rotating shaft 130 may increase, so the number of angles of the friction screen 121 may be selectively applied depending on the type of waste plastic and the level of contamination to which the foreign substances are attached.

The plurality of holes 122 are holes that penetrate from the inner surface to the outer surface of the friction screen 121, and may be densely formed on the entire surface of the friction screen. The shape of the hole 122 may be circular or rectangular, but is not limited thereto. When the hole 122 is rectangular, since waste plastic flake WP has a moving pattern that moves gently forward through the friction blade described later, it may be effective in the surface peeling treatment of the waste plastic flake. In addition, the size of the plurality of holes 122 may be adjusted so that the waste plastic flake WP may not pass through and only the peeled foreign substances F may be discharged. For example, when the shape of the hole 122 is circular, the diameter of the hole may be about 4 mm or less, specifically about 1 mm to 4 mm, and more specifically about 2 mm to 40 mm, but is not limited thereto. As another example, when the shape of the hole 122 is rectangular, i.e., a slit shape, the width of the hole may be about 3 mm or less, specifically about 1 mm to 2 mm, and the length of the hole may be about 0.5 cm or more, and specifically about 1 cm to 5 cm, but is not limited thereto.

For example, when the hole 122 is rectangular, the hole 122 may have a predetermined inclination based on a horizontal line of the friction screen 121, and may be inclined in a range of, for example, 0° to 30°, and specifically 5° to 10°. When the inclination range is satisfied, it is possible to sufficiently remove the foreign substances while preventing the excessive loss of the raw material.

Meanwhile, referring to FIG. 1, the rotating shaft 130 has the friction blade 132 provided on the outer surface positioned in the foreign substance removal unit 120 and is rotatably disposed inside the friction screen 121 to rub the waste plastic flake WP in a rotational manner, thereby peeling off the foreign substances attached to the waste plastic flake. More specifically, the friction blade 132 may peel off foreign substances attached to the surface by rubbing the waste plastic flake WP transported from the injection unit 112 toward the foreign substance removal unit 120 by the rotational operation of the injection screw 131.

Here, the friction blade 132 may have one edge, and as illustrated in FIG. 2, the friction blade having one edge may be provided on the outer circumferential surface of the rotating shaft in one or more, and more specifically two. The surface peeling of the waste plastic flake is performed by the friction through the edge portion of the friction blade, and at the same time, the fusion of the waste plastic flake generated by the frictional heat may be minimized.

The friction blade 132 may have a predetermined twist angle based on the longitudinal direction of the rotating shaft. Even when the friction blade 132 is provided without a twist angle, that is, with a twist angle of 0°, the waste plastic flake supplied through the injection screw 131 can be transported toward the raw material outlet 150 by the pressure. However, when the friction blade 132 has a predetermined twist angle (that is, a twist angle exceeding 0°), there is an advantage in that it may additionally receive a moment that proceeds toward the raw material outlet 150.

For example, the friction blade 132 may have a twist angle of 0° to 50°, specifically 20° to 40°, and more specifically 25° to 35° with respect to the longitudinal direction of the rotating shaft. Due to the twist angle of the friction blade 132, the waste plastic plate WP in the foreign substance removal unit 120 may be transported toward the raw material outlet 150, and at the same time, may be rubbed with the hole of the friction screen to peel off the foreign substances. In addition, when the twist angle of the friction blade 132 satisfies the above range, it is possible to minimize the loss of the raw material while improving the foreign substance removal efficiency. More specifically, when the twist angle of the friction blade 132 is too large, the foreign substance removal rate may be reduced along with the increase in the motor load due to the rotational force of the rotating shaft 130. On the other hand, when the twist angle of the friction blade 132 is too small, the motor load may be reduced, but the raw material loss rate may increase due to the excessive friction.

In addition, the moisture injection nozzle 140 is provided at one end of the rotating shaft 130 to supply moisture M to the foreign substance removal unit 120. As illustrated in FIG. 1, the moisture injection nozzle 140 may inject the moisture M from the direction in which the raw material outlet 150 is positioned to the direction in which the waste raw material injection unit 110 is positioned.

In this case, it is preferable that the moisture M is supplied in the mist state. By supplying the moisture M in the mist state, the moisture may be evenly sprayed on the waste plastic flake. In this way, the frictional heat generated by the friction of the waste plastic flake may be cooled by utilizing the latent heat generated during the moisture evaporation, and the foreign substance on the surface of the waste plastic flake may be swollen, thereby making it easier to remove the foreign substances by the friction.

Referring to FIGS. 1 and 2, the rotating shaft 130 may be provided with a moisture injection path 133 for transporting the moisture M supplied from the moisture injection nozzle 140 and a moisture supply port 134 for discharging the moisture M from the inside of the rotating shaft to the outside. In addition, air may also be transported through the moisture injection path 133 and the moisture supply port 134 in addition to the moisture.

The moisture injection path 133 is provided inside the rotating shaft, and may be supplied with and transport the moisture from the moisture injection nozzle 140 provided at one end of the rotating shaft. Here, the moisture injection path 133 may have a structure in which both sides are closed. Due to the closed structure, the internal pressure of the foreign substance removal unit 120 may be reduced to form a vacuum condition, thereby creating the environment in which the moisture may easily evaporate and increasing the cooling efficiency by utilizing the latent heat generated during the evaporation. The internal pressure of the foreign substance removal unit 120 may be determined according to the output of the blower (intake fan, not shown) and the degree of airtightness. As the internal pressure of the foreign substance removal unit 120, for example, a negative pressure of 0 mmHg to 500 mmHg, and specifically 200 mmHg to 300 mmHg may be applied. When the internal pressure is formed as a negative pressure, the evaporation point of moisture may be lowered, thereby improving the cooling efficiency.

Furthermore, in order to increase the dispensability of the moisture M, the porous guide 141 may be further provided at one end of the moisture injection nozzle 140. Referring to FIGS. 3 and 4, the porous guide 141 may be provided to penetrate through the moisture injection path 133 provided inside the rotating shaft. Specifically, the porous guide may be provided to extend in the longitudinal direction of the rotating shaft and to be spaced apart from the inner wall of the rotating shaft provided with the moisture injection path. In the case where the porous guide 141 is further provided at the end of the moisture injection nozzle 140, the moisture may be transported to the moisture injection path positioned at the other end of the rotating shaft, thereby enabling the uniform supply and thus further improving the dispensability of the moisture. In this case, the moisture supplied from the porous guide 141 is in the mist state.

The moisture supply port 134 is provided on one surface of the friction blade 132 to discharge the moisture from the moisture injection path 133 to the outside of the rotating shaft, thereby supplying the moisture M to the foreign substance removal unit 120. The moisture supply unit is in the form of a slit and may be formed in a plurality at a constant interval along the edge of the friction blade 132. As a result, the moisture and air may be sent toward the waste plastic flake WP distributed throughout the friction processing section of the foreign substance removal unit 120, thereby evenly spraying the moisture inside the friction screen 121 and at the same time discharging the peeled foreign substances F to the outside of the friction screen 121. In addition, since the moisture injection area also rotates due to the rotation of the rotating shaft provided with the moisture supply port, the moisture may be supplied to the waste plastic flake more evenly.

More specifically, referring to FIG. 2, the moisture supply port 134 is provided parallel to the longitudinal direction of the edge of the friction blade 132, and may be positioned in the opposite direction to the direction in which the rotating shaft 130 rotates based on the edge of the friction blade 132. More specifically, referring to FIG. 2, when the friction blade 132 having one edge has a front surface a and a rear surface b based on the edge with respect to the direction in which the rotating shaft 130 rotates (counterclockwise), it is preferable that the moisture supply port 134 is positioned at the rear surface b of the friction blade 132. Since the moisture supply port 134 is positioned in the opposite direction to the direction in which the rotating shaft rotates, i.e., at the rear surface b of the friction blade, it is possible to prevent the waste plastic flakes WP from getting stuck in the moisture supply port 134, and also to evenly supply the moisture M to the waste plastic flake inside the friction screen.

In addition, the moisture supply port 134 may be formed in the longitudinal direction of the rotating shaft from one side to the other side of the foreign substance removal unit, thereby evenly spraying the moisture onto the waste plastic flake, and may play a role in allowing the foreign substances on the surface of the waste plastic flake to be easily removed by the friction due to the supplied moisture. In addition, the supplied moisture may play a cooling role in order to prevent the plastic flake from being heated to a glass transition temperature (T_{g}) or higher due to the frictional heat that may be generated during the friction. Furthermore, due to the lowered pressure in the foreign substance removal unit due to the closed structure, the latent heat generated during the evaporation is utilized for cooling along with the sensible heat of the supplied moisture, thereby maximizing the resin cooling effect.

Accordingly, the internal temperature of the foreign substance removal unit 120 may be maintained at the glass transition temperature (Tg) or lower of the raw material, for example, in the range of 20°C to 100°C, and specifically 50°C to 80°C. By maintaining the internal temperature of the foreign substance removal unit 120 in the above range, the fusion of waste plastic flakes due to the heat generated during the friction processing may be prevented.

Meanwhile, the waste plastic flake P from which the foreign substances are finally removed through the friction processing in the foreign substance removal unit 120 is discharged through the raw material outlet 150. More specifically, the waste plastic flake WP to which the foreign substances are attached to the waste raw material injection unit 110 is subjected to the friction processing in the foreign substance removal unit 120 to peel off the foreign substances, and the waste plastic flake P from which the foreign substances are removed may be discharged through a discharge tray provided in the raw material outlet 150.

In addition, a damper 151 for opening and closing the raw material outlet 150 may be provided between the foreign substance removal unit 120 and the raw material outlet 150. Furthermore, the damper 151 may be provided with a damper pressure control unit 152 that determines the internal pressure of the foreign substance removal unit.

The damper 151 applies pressure to the waste plastic flake WP positioned in the foreign substance removal unit 120 according to the weight set by the damper pressure control unit 152, thereby increasing the friction between the waste plastic flakes.

Meanwhile, a foreign substance outlet 160 may be provided at the lower portion of the foreign substance removal unit 120 to discharge the foreign substances F peeled off from the waste plastic flake by the foreign substance removal unit. The foreign substances F peeled off from the waste plastic flake discharged to the outside of the friction screen 121 through the hole 122 of the friction screen may be collected in the downward direction of the foreign substance removal unit 120 and finally discharged to the outside of the apparatus through the foreign substance outlet 160.

Hereinabove, the apparatus for removing a foreign substance from waste plastic according to the present disclosure has been shown in the description and drawings, but the above drawings and the description describe and illustrate only the essential components for understanding the present disclosure. In addition to the processes and apparatus illustrated in the above description and drawings, processes and apparatus not separately described and shown may be appropriately applied and used to implement the apparatus for removing a foreign substance from waste plastic according to the present disclosure.

In the foregoing, exemplary embodiments of the present disclosure have been described, but the present disclosure is not limited thereto, and those of ordinary skill in the art will be able to understand that various changes and modifications are possible within the scope and scope of the claims set forth below.

### [Description of Reference Signs]

100, 100': Apparatus for removing a foreign substance from waste plastic
110: Waste raw material injection unit, 111: Injection hopper, 112: Injection path, 113: Hopper cover
120: Foreign substance removal unit, 121: Friction screen, 122: Hole
130: Rotating shaft, 131: Injection screw, 132: Friction blade
133: Moisture injection path, 134: Moisture supply port
140: Moisture injection nozzle, 141: Porous guide
150: Raw material outlet, 151: Damper, 152: Damper pressure control unit
160: Foreign substance outlet
WP: Waste plastic flake before friction processing
P: Waste plastic flake after friction processing
F: Peeled-off foreign substance
M: Moisture

## Claims

1. An apparatus for removing a foreign substance from waste plastic, comprising:
a waste raw material injection unit that is provided on an upper portion of one side to inject a waste plastic flake, a foreign substance removal unit that removes foreign substance attached to the waste plastic flake by friction, and a raw material outlet that is provided on the other side portion to discharge the waste plastic flake from which the foreign substance is removed,
a friction screen that is disposed inside the foreign substance removal unit to accommodate the waste plastic flake supplied from the waste raw material injection unit;
a rotating shaft that has a friction blade provided on an outer circumferential surface thereof, is rotatably disposed inside the friction screen, and peels off the foreign substance attached to the waste plastic flake by rubbing the waste plastic flake in a rotational manner; and
a moisture injection nozzle that is provided at one end of the rotating shaft to supply moisture to the foreign substance removal unit,
wherein the rotating shaft comprises:
a moisture injection path that is provided therein and supplied with moisture from the moisture injection nozzle and transports the moisture; and
a moisture supply port that is provided on one surface of the friction blade to discharge the moisture from the moisture injection path to an outside of the rotating shaft and supply the moisture to the foreign substance removal unit.

2. The apparatus of claim 1,
wherein the moisture injection nozzle injects the moisture from a direction in which the raw material outlet is positioned to a direction in which the waste raw material injection unit is positioned.

3. The apparatus of claim 1,
wherein the moisture supply port is provided parallel to a longitudinal direction of an edge of the friction blade and is positioned in an opposite direction to a direction in which the rotating shaft rotates based on the edge of the friction blade.

4. The apparatus of claim 3,
wherein the friction blade has a twist angle of 0° to 50° based on the longitudinal direction of the rotating shaft.

5. The apparatus of claim 1,
wherein the moisture injection path has a structure in which both sides are closed.

6. The apparatus of claim 1, wherein the waste raw material injection unit comprises:
an injection hopper that injects the waste plastic flake;
an injection path for transporting the waste plastic flake supplied from the injection hopper to the foreign substance removal unit; and
a hopper cover that is provided on an upper portion of the injection hopper to block an inflow of external air.

7. The apparatus of claim 1,
wherein an injection screw is provided on the outer circumferential surface of the rotating shaft positioned in the injection path to transport the waste plastic flake to the foreign substance removal unit.

8. The apparatus of claim 1, wherein the raw material outlet further comprises:
a damper that is provided between the foreign substance removal unit and the raw material outlet to open and close the raw material outlet; and
a damper pressure control unit that determines an internal pressure of the foreign substance removal unit.

9. The apparatus of claim 1,
wherein a plurality of holes are provided on a front surface of the friction screen, and
the foreign substance separated from the waste plastic flake is discharged to an outer side of the friction screen through the plurality of holes.

10. The apparatus of claim 1, further comprising:
a foreign substance outlet that is provided at a lower portion of the foreign substance removal unit to discharge the foreign substance peeled from the waste plastic flake in the foreign substance removal unit.

11. The apparatus of claim 1,
wherein the friction screen is formed in any one structure selected from a polygonal tubular structure and a cylindrical structure.

12. The apparatus of claim 11,
wherein the polygon is a hexagon or a decagon.

13. The apparatus of claim 1,
wherein the moisture injection nozzle supplies the moisture in a mist state.

14. The apparatus of claim 1, further comprising:
a porous guide that is connected to one end of the moisture injection nozzle and extends to be separated from an inner wall of the rotating shaft provided with the moisture injection path.
